# EUROPEAN PATENT APPLICATION

(11) **EP 3 315 055 A1**
(43) Date of publication of application: **02.05.2018**
(21) Application number: 16813456.7
(22) Date of filing: 13.01.2016
(51) Int. Cl.: A47J 31/08, A47J 31/10, A47J 31/06, A47G 19/16, B01D 29/07

(54) **DISPOSABLE CARTRIDGE FOR USE AS A FILTER, IN PARTICULAR FOR THE INFUSION OF SOLUBLE ELEMENTS, AROMATIC HERBS SUCH AS TEA, COFFEE, CHAMOMILE, ETC.**

(30) Priority: 25.06.2015 CL 20151843
(71) Applicant: Llach Villalobos, Gonzalo Felipe, Santiago C.P. 7550118 (CL)
(72) Inventor: Llach Villalobos, Gonzalo Felipe, Santiago C.P. 7550118 (CL)
(74) Representative: Pons
(86) International application number: PCT/CL2016/000001
(87) International publication number: WO 2016/205964

(57) **Abstract**

The invention relates to a disposable cartridge for use as a filter, in particular for the infusion of soluble elements, aromatic herbs such as tea, coffee, chamomile, comprising means for fixing same in a secure and stable manner without occupying the entire annular diameter of a glass or cup, characterised by being formed by a symmetrical laminar sheet (2), the base shape of which is determined by an upper zone of sinusoidal contours (3), with an upper central peak or rounded tongue (4), followed by curved shoulders (4a), in the central zone of which an oblong slot or opening (5) is provided having rounded ends (6) and serving as a means for securing or fixing the cartridge (1) to the upper peripheral rim or ring (7) of the glass (8), and with the lower zone of the sheet (2) having a obtuse triangular body (9) with straight sides (9a).

## Description

### Background of the Invention

The present invention relates to a disposable cartridge, for use as a filter, especially for soluble elements infusion, aromatic herbs such as tea, coffee, chamomile and others, formed with a laminar template, provided with a perimeter tongue, an upper opening or slot for fixing or holding a cup or any unwanted element, in an upper perimetric rim which allows to improve and avoid the use of other elements for its fixation or holding.

In attention to the state of the art cartridges, especially for soluble elements infusion, we can cite the invention patent CL No.49.144, which refers to a disposable cartridge, for use as a filter, especially for soluble elements infusion, aromatic herbs such as tea, coffee, chamomile, whose configuration comprises means to securely and stably hold it without occupying the entire diameter of a cup, characterized in that it is formed with a laminar template (2), divided into three straight contours sections, a center section (3), which constitutes the container (4) and two obliquely disposed side sections (5), which overlaps to constitute a straight back wall (6); said obliquely arranged side sections (5) are provided with an extension or section (7) that overlaps to constitute a handle (8), both being provided with a tongue, a minor clamping tongue (9) and a larger upper tongue (10), both are the attachment means to a cup (12) annular ring (11) or the like.

Another invention is the document ES 2 195 481, which relates to a beverages infusion filter, in particular for a coffee filter and to a method for the manufacture of this kind of filters, where a fibrous material with pores is used with a minimum pore opening (d) of around 0.1 mm measured with a fiber density that accounts for approximately 50% of the original fiber density of the material, the average pore opening (d) is preferably in a range of around 0.1 mm to around 0.7 mm and more preferably in a range of around 0.1 mm to around 0.4 mm, the material is preferably paper, the pores are further preferably formed by means of needle punching or fibrous material water jet injection, in this way a non-sharp pore rim is formed.

In view of currently existing deficiencies and disadvantages, with the cartridges used to filtering and to prepare aromatic herbs, a cartridge has been created with a single body and division's template, much is more practical for its manufacture and use, and equipped with a different fixing system and stay sustained in its cup attachment or fixation.

### Brief Description of the Drawings

To understand more clearly the cartridge conformation formed with a uniform template and its means for use as a filter, especially for the infusion extraction of soluble elements such as aromatic herbs or the like, it will describe it according to the drawings that are integral part to this presentation, without limiting it to obvious modifications that may arise, where:
Fig. 1 is a top and extended plan view of a laminar template, with the assembly and fixing means to form the aromatic herbs infusion cartridge of the invention.
Fig. 2 is a view of a symmetrically folded template to form the aromatic herbs infusion cartridge of the invention.
Fig. 3 is a perspective side view of an assembly cartridge to form the aromatic herbs infusion cartridge of the invention.
Fig. 4 is a perspective side view of the cartridge with a sequential detail with a pleat or fold of the system for fixing the aromatic herbs infusion cartridge of the invention.
Fig. 5 is a top plan view of the cartridge installed in a cup.
Fig. 6 is a top plan view of the cartridge installed in a cup.
Fig. 7 is a perspective elevation view of the cup with the cartridge of the invention installed inside, ready for use.
Fig. 8 is a front elevation view of the cup with the cartridge of the invention installed therein, ready for use.

### Description of the Invention

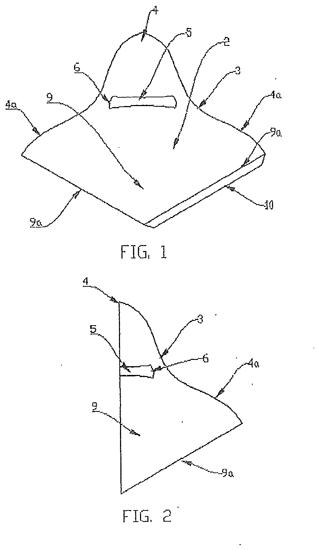

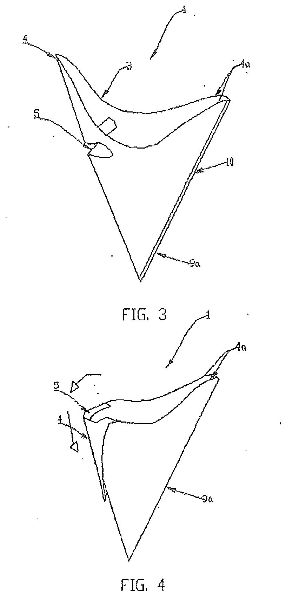

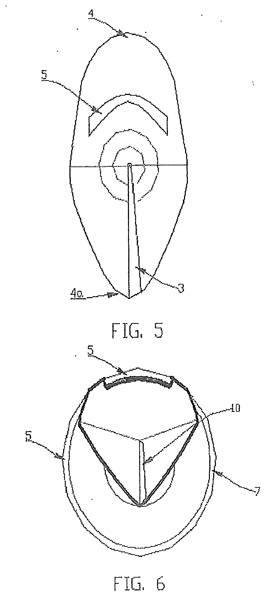

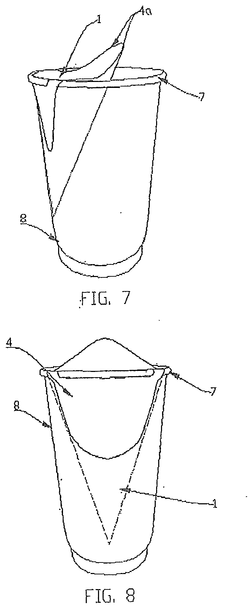

According to Figures 1 to 8, the aromatic herbs infusion conical cartridge (1), is formed with a symmetrical laminar template (2), whose planar shape is determined by an upper zone of sinusoidal contours (3), with a superior central ridge or rounded tongue (4), followed by curved shoulders (4a), in whose middle zone has an oblong slot or opening configuration (5) with rounded ends (6), which serves as a means of cartridge attachment or fixation (1) with the upper perimeter flange (7) of a cup (8); the template lower area (2) has a triangular obtuse-angled body (9) with straight sides (9a) of the lower vertex angle or legs or chords being 128º and the lateral vertex angles are 70°, being provided in one of the legs or chords of the triangular obtuse body (9) with a trapezoidal flap (10), which allows sealing and joining the sides of the legs or chords and forming the conical body cartridge.

For the cartridge assembly (1), only one fold of the template (2) must be done through the symmetry A-A axis until it is overlapped with the trapezoidal flap (10); then to fix the cartridge (1) in the cup (8) the rounded tongue (4) must be folded downward to but with the oblong opening (5) so that said 8% opening is fixed with the perimeter flange (7) of the cup (8) thus leaving the cartridge (1) located parallel to the wall of the cup (6).

## Claims

1. A disposable cartridge for use as a filter especially for soluble elements, aromatic herbs such as tea, coffee, chamomile, infusion whose configuration comprises means to securely and stably fix it without occupying the entire annular diameter of a cup or container **CHARACTERIZED in that** it is formed with a symmetrical laminar template (2) whose plantar shape is determined by an upper sinusoidal contours area (3) with a superior central ridge or rounded tongue (4) followed by curved shoulders (4a) in whose middle zone it is present a slot or oblong shaped opening (5) with rounded ends (6), which serves as a means for holding the cartridge (1) with the cup (8) upper perimetric rim (7) in which the lower area of the template (2) has a triangular obtuse-angled body (9) with straight sides (9a).

2. A disposable cartridge according to claim 1 **CHARACTERIZED in that** the lower vertex angle or between the legs or chord of said template (2), is 128° and the lateral vertex angle are 70°, the template being provided in one of the legs or chord with a trapezoidal flap (10), which allows to seal and join the template sides of the legs (2) and thus assemble the cartridge conical body (1).

3. A disposable cartridge according to claim 1, **CHARACTERIZED in that** the oblong slot (5) have a triangular section configuration, with a central linear demarcation (17) for guidance and followed with an extension or section (7) of truncated inverted triangular configuration, which are provided with transverse folds pleats (18); in addition, both truncated triangular sections (7), have the minor tongue (9) and the larger tongue (10), these are born from said truncated triangular sections body (7), being the minor tongue (9), which is bent and engages with the ring or annular rim (11) of the cup (12), and the other major tongue (10), it is located perpendicular to said annular rim (11), so that the cartridge is supported on the inside of said cup (12).
